# EUROPEAN PATENT APPLICATION

(11) **EP 2 868 951 A1**
(43) Date of publication of application: **06.05.2015**
(21) Application number: 14190806.1
(22) Date of filing: 29.10.2014
(51) Int. Cl.: F16K 5/04, F16K 27/06

(54) **Valve and construction machine with the same**

(30) Priority: 30.10.2013 JP 2013225081
(71) Applicant: Kobelco Construction Machinery Co., Ltd., Hiroshima 731-5161 (JP)
(72) Inventor: Hayashi, Ryosuke, Hiroshima-shi,, Hiroshima 731-5161 (JP); Irieda, Katsuya, Hiroshima-shi,, Hiroshima 731-5161 (JP)
(74) Representative: TBK

(57) **Abstract**

A valve (10) capable of restraining a valve element (11) having a flow-path hole (13) from unintentional rotational movement to close the valve (10) is provided midway of a flow pipe, including the valve element (11) and a holding member (12) holding the valve element (11) to permit rotational movement thereof and having inlet and outlet ports (18A, 18B). The valve element (11) makes the rotational movement between a first position for bringing the ports (18A and 18B) into communication with each other through the flow-path hole (13) and a second position of blocking the communication to close the flow path. The flow-path hole (13) has inlet and outlet openings facing respective inlet and outlet ports (18A, 18b), in the first position. The inlet opening has a shape capable of embracing an outer edge of a valve-element-side opening of the inlet port (18A) facing the valve element (11) and a size greater than that of the outer edge of the valve-element-side opening circumstantially of the rotational movement of the valve element (11).

## Description

### Technical Field

The present invention relates to a valve that regulates a flow of a fluid in a flow pipe and a construction machine with the valve.

### Background Art

There are many flow pipes which are provided with various valves for regulating flow of liquid. For example, Japanese Utility Model Application Publication No. H2-23056 discloses an excavator including a front attachment (1) with a tip portion to which a special working implement such as a crusher can be mounted, a high-flow-rate pipe (9) disposed along the front attachment (1) to supply hydraulic oil to the special working implement, and a stop valve (6) provided downstream of the high-flow-rate pipe (9). The stop valve (6) is opened when the special working implement is mounted to the front attachment (1) and is otherwise closed.

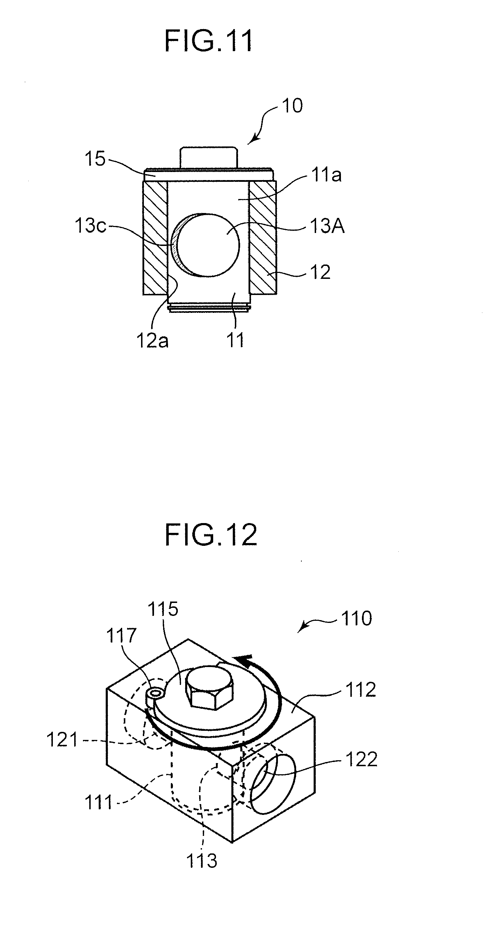

As a valve such as the stop valve (6) which is provided in the flow pipe, known is one shown in Fig. 12, a valve 110. The valve 110 has a valve element 111 with a flow-path hole 113 and a block 112 which is a holding member for holding the valve element 111 so as to allow the valve element 111 to be rotated about a rotational axis X orthogonal to the flow-path hole 113. The valve element 111 includes a rotation-restriction member 115 provided at an upper portion of the valve element 111, to which a rotational operation is applied to change the direction of the flow-path hole 113, thus opening or closing the flow path. Specifically, the block 112 includes an inlet port 121, to which an upstream section of the flow pipe is connected, and an outlet port 122, to which a downstream section of the flow pipe is connected.

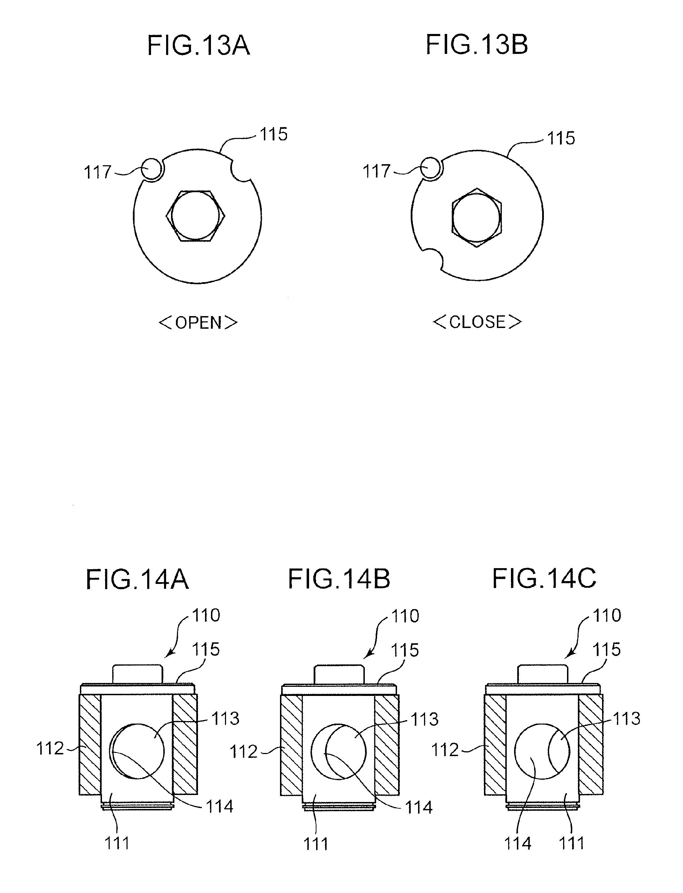

As shown in Fig. 13, the rotation-restriction member 115 is fixed to the holding member 112 through a bolt 117 whereby the valve element 111 is restricted at an open position and at a close position. This structure, while having an advantage of reliably restricting the valve element 111, requires attachment/detachment of the bolt 117 with respect to the block 112 for every open/close switching, leading to reduced working efficiency. Simplification or omission of the structure for locking the valve element 111 at the open position and the closed position in order to avoid the above-described inconvenience could allow the valve element 111 in the open position to be displaced toward the closed position to reduce an opening area or close the valve.

Specifically, even with slight rotational movement of the valve element 111 from the open position toward the closed position under the pressure of fluid passing through the flow-path hole 113, a part of an outer peripheral surface 114 of the valve element 111 surrounding the flow-path hole 113 can face the inlet port 121 as shown in Fig. 14A. The fluid flowing in the flow pipe continues striking the outer peripheral surface 114A, thereby gradually advancing the rotation of the valve element 111, as shown in Fig. 14B and Fig. 14C, generating a possibility of finally closing the valve.

### Summary of Invention

An object of the present invention is to provide a valve including a valve element and being capable of suppressing unintentional rotational movement of the valve element from the open position to the closed position to close the valve.

Provided by the present invention is a valve provided midway of a flow pipe forming a flow path to regulate a flow of liquid in the flow path, the valve including: a valve element with a cylindrical outer peripheral surface centered around a rotation axis orthogonal to a direction of the flow path of the flow pipe, the valve element formed with a flow-path hole penetrating the valve element orthogonally to the rotation axis; and a holding member holding the valve element while keeping contact with the outer peripheral surface of the valve element, so as to permit the valve element to make rotational movement about the rotation axis, the holding member having an inlet port to which an upstream section of the flow pipe is connected and an outlet port to which a downstream section of the flow pipe is connected, the inlet port and the outlet port located on respective opposite sides of the holding member across the valve element in a direction orthogonal to the rotation axis. The rotational movement about the rotation axis allows the valve element to move between a first position where the flow-path hole brings the inlet port and the outlet into communication with each other to open the flow path and a second position where the flow-path hole is deviated from the inlet port and the outlet port in a direction of the rotational movement to let the valve element block the communication between the inlet port and the outlet port thereby closing the flow path. The flow-path hole has an inlet opening and an outlet opening which face the inlet port and the outlet port, respectively, in the first position. The inlet opening has a shape capable of embracing an outer edge of a valve-element-side opening which is an opening of the inlet port and faces the valve element and a greater size than that of the outer edge of the valve element-side opening of the inlet port in a circumferential direction of the rotational movement of the valve element.

The present invention also provides a construction machine operated through hydraulic fluid, the construction machine including a flow pipe forming a flow path for the hydraulic fluid and the above-described valve, the valve being provided midway of the flow pipe to regulate flow of liquid in the flow pipe.

### Brief Description of Drawings

Fig. 1 is a perspective view of a front attachment of a construction machine according to an embodiment of the present invention;
Fig. 2A is a perspective view of a valve provided in the construction machine;
Fig. 2B is a perspective view of the whole valve except for a holding member;
Fig. 3 is a plan view of the valve in a first position;
Fig. 4 is a side view of the valve in the first position;
Fig. 5 is a diagram showing a cross section taken along line V-V in Fig. 3;
Fig. 6 is a diagram showing a cross section taken along line VI-VI in Fig. 4;
Fig. 7 is a diagram showing a cross section taken along line VII-VII in Fig. 4;
Fig. 8A is a plan view showing the position of a rotation restriction member when a valve element of the valve according to the embodiment is in the first position;
Fig. 8B is a plan view showing the position of a rotation-restriction member when a valve element of the valve according to the embodiment is in a second position;
Fig. 9 is a cross-sectional front view of a valve according to a variation of the embodiment;
Fig. 10 is a cross-sectional plan view of the valve according to the variation;
Fig. 11 is a cross-sectional front view of the valve according to the variation;
Fig. 12 is a perspective view of a conventional valve;
Fig. 13A is a plan view showing an open position of the valve shown in Fig. 12;
Fig. 13B is a plan view depicting a close position of the valve shown in Fig. 12; and
Figs. 14A to 14C are respective cross-sectional front views of a valve including a valve element formed with a flow-path hole for showing respective opening degrees of the valve element in respective rotation positions of the valve.

### Description of Embodiments

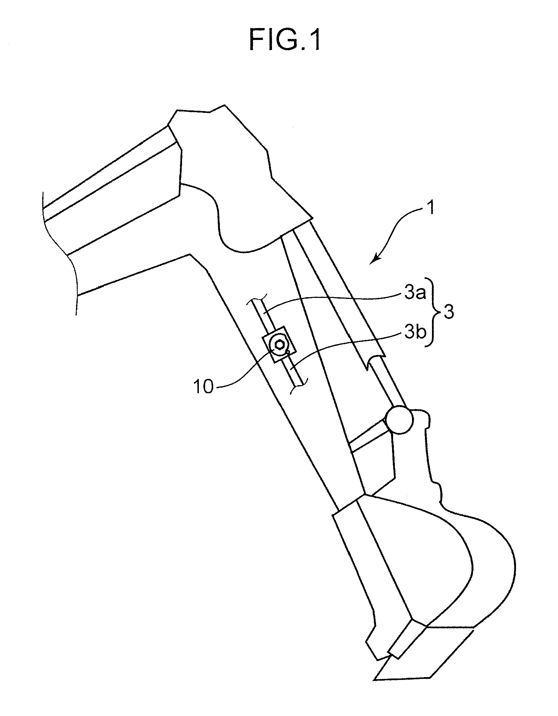

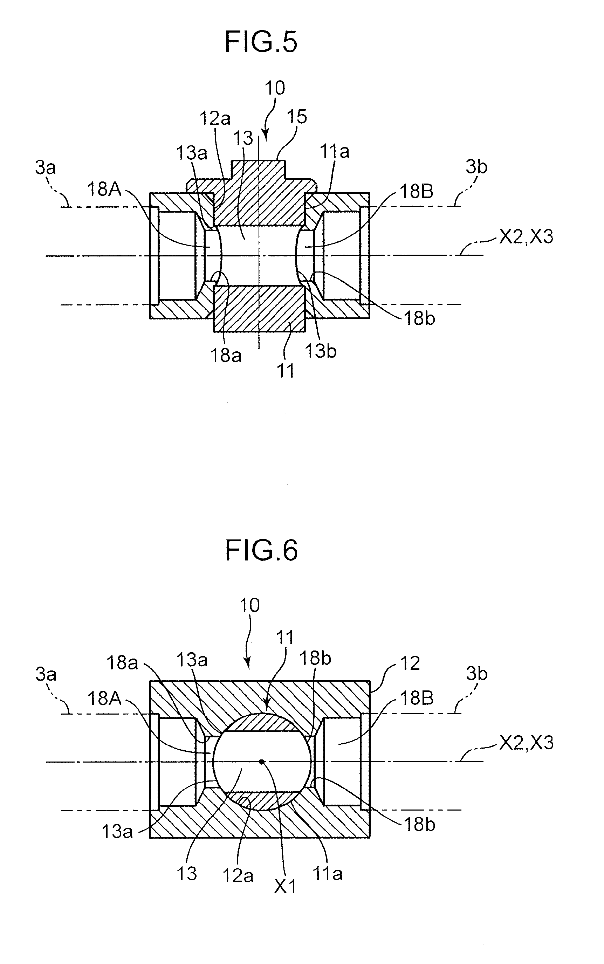

There will be described a valve and a construction machine with the valve according to an embodiment of the present invention with reference to Figs. 1 to 8. The description below takes an excavator and a stop valve as respective examples of the construction machine and the valve.

Fig. 1 shows a front attachment 1 of an excavator that is an example of the construction machine. The excavator further includes a flow pipe 3 and a valve 10.

The flow pipe 3 is disposed along a side surface of the front attachment 1 to form a flow path for a hydraulic fluid, e.g., oil.

The valve 10 is provided midway of the flow pipe 3 so as to regulate a flow of the hydraulic fluid in the flow pipe 3. The valve 10 according to the embodiment functions as a stop valve configured to be operated to open or close the flow path formed by the flow pipe 3. Specifically, for attachment and detachment of an implement with respect to a tip portion of the front attachment, the valve 10 is closed to temporarily stop the flow of the hydraulic fluid in the flow pipe 3. Subsequently, when the implement has been attached to the tip portion of the front attachment 1, the valve 10 is opened again to resume the flow of the hydraulic fluid in the flow pipe 3. For example, the front attachment 1 shown in Fig. 1 has an arm 1a and a bucket 1b attached to a tip portion of the arm 1a; in the case of attaching a special working implement at the tip portion of the arm 1a, for breaker operation or the like, instead of the bucket 1b, the valve 10 is closed during the attachment work of the special working implement to temporarily stop the flow of the hydraulic fluid in the flow pipe 3, Subsequently, when the special working implement has been attached, the valve 10 is opened to open the flow path formed by the flow pipe 3, permitting the hydraulic fluid to be supplied to the special working implement through the flow path.

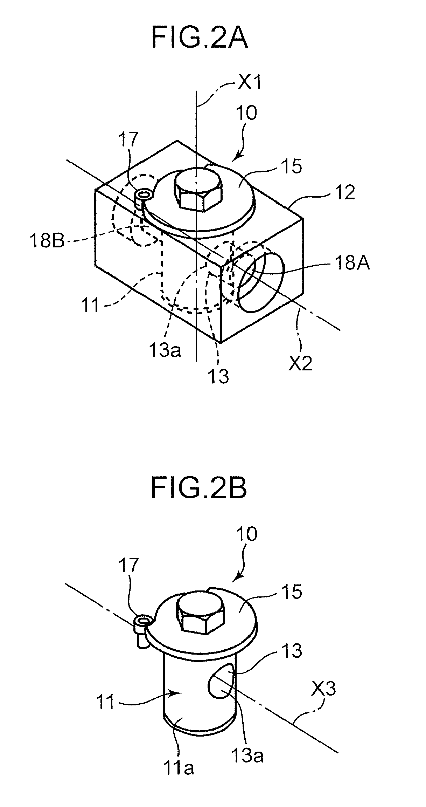

As shown in Fig. 2A and Fig. 2B, the valve 10 includes a valve element 11 formed with a flow-path hole 13, a holding member 12, a rotation-restriction member 15, and a bolt 17 as a locking portion.

The valve element 11 has a cylindrical outer peripheral surface 11a centered around a predetermined rotation axis X1. In the embodiment, the valve element 11 is shaped as a cylindrical column, and the flow-path hole 13 is formed so as to penetrate the valve element 11 along an axis X2 orthogonal to the rotation axis X1. The valve element 11 is inserted into the holding member 12 to be held therein in such a posture that the rotation axis X1 is orthogonal to the axis X2 of the flow-path hole 13 and an axis X3 of the flow path formed by the flow pipe 3.

In this embodiment, the holding member 12 is a rectangular parallelepiped-shaped block, having an inner peripheral surface 12a which encloses a space into which the valve element 11 is inserted. The inner peripheral surface 12a is shaped as a cylinder conforming to the outer peripheral surface 11a of the valve element 11. The holding member 12 holds the valve element 11 with the close contact of the inner peripheral surface 12a and the outer peripheral surface 11a with each other, while allowing the valve element 11 to make rotational movement about the rotation axis X1 relatively to the holding member 12 involving sliding contact of the outer peripheral surface 11a with the inner peripheral surface 12a.

The holding member 12 has an inlet port 18A and an outlet port 18B. The ports 18A and 18B are located at respective opposite sides of the holding member 12 across the valve element 11 in a direction orthogonal to the rotation axis X1 to bring a space into which the valve element 11 is inserted into communication with the outside of the holding member 12. To the inlet port 18A is connected an upstream section 3a of the flow pipe 3; to the inlet port 18B is connected a downstream section 3b of the flow pipe 3.

The above rotational movement about the rotation axis X1 allows the valve element 11 to move between a first position, which is an open position where the valve element brings the ports 18A and 18B into communication with each other to open the flow path as shown in Fig. 2, Fig. 5, and Fig. 6, and a second position, which is a close position where the valve element 11 blocks the communication between the ports 18A and 18B to close the flow path. In the first position, the axis X3 of the flow-path hole 13 formed in the valve element 11 coincides with the axis X2 of the flow path formed by the flow pipe 3 to open the flow path through the flow-path hole 13. In the closed position, the center axis X3 of the flow-path hole 13 and the center axis X2 of the flow path cross each other (for example, are orthogonal to each other) to deviate the flow-path hole 13 of the valve element 11 from the flow path in a direction of the rotational movement of the valve element 11, thus letting the valve element 11 block the flow path.

The rotation-restriction member 15 is connected to an upper portion of the valve element 11 so as to make rotational movement integrally with the valve element 11, thus allowing a user to apply to the valve element 11 a rotational operation for rotating the valve element 11 about the rotation axis X1 by gripping the rotation-restriction member 15 to apply the rotational operation thereto.

The bolt 17 is fixed to the holding member 12 so as to project beyond an upper surface of the holding member 12 and engages with the rotation-restriction member 15 to restrain the valve element 11 from rotational movement at the open position and at the closed position.

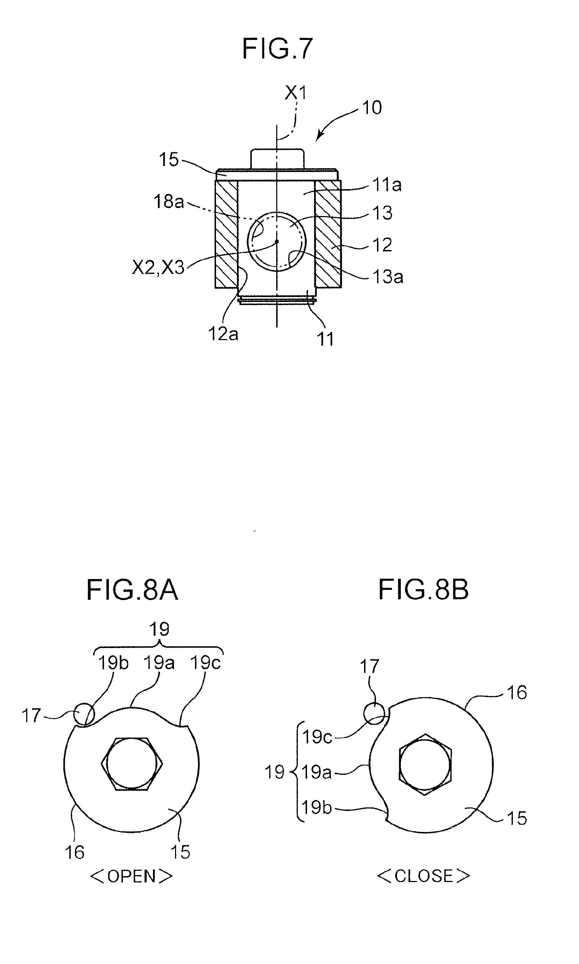

As shown in Fig. 8A and Fig. 8B, the rotation-restriction member 15 has a shape which permits the valve 10 to be opened and closed by the rotational movement thereof integrally with the valve element 11 while remaining engaged with the bolt 17. Specifically, the rotation-restriction member 15 according to the embodiment is shaped as a flat plate having a thickness direction parallel to the rotation axis X1. The rotation-restriction member 15 has an outer peripheral surface including a normal portion 16 shaped as a circular arc occupying a range corresponding to a predetermined central angle and a rotational-movement restraint section 19 occupying the remaining range. The rotational-movement suppression section 19 has an intermediate portion 19a with a radius of curvature smaller than the radius of curvature of the normal portion 16 and first and second restricted portions 19b and 19c located on respective opposite sides across the intermediate portion 19a. The intermediate portion 19a is shaped as a circular arc capable of making sliding contact with the bolt 17 in a direction of the rotational-movement of the valve element 11 to permit the valve element 11 to make the rotational movement between the first position and the second position. The first restricted portion 19b and the second restricted portion 19c have respective shapes to be restricted by the bolt 17 in a circumferential direction of the rotational movement of the valve element 11 so as to restrain the valve element 11 from the rotational movement from the first position and the rotational movement from the second position.

The engagement between the bolt 17 and the rotation-restriction member 15 does not completely fix the valve element 11 at the first position that is the open position or at the second position that is the closed position, thus possibly permitting the valve element 11 to make the rotational movement slightly, for example, from the first position (open position) toward the second position (close position), under the pressure of the fluid flowing through the flow path; however, the inconvenience resulting therefrom, that is, the inconvenience of unexpected closure of the valve 10, is prevented by the shape of the flow-path hole 13.

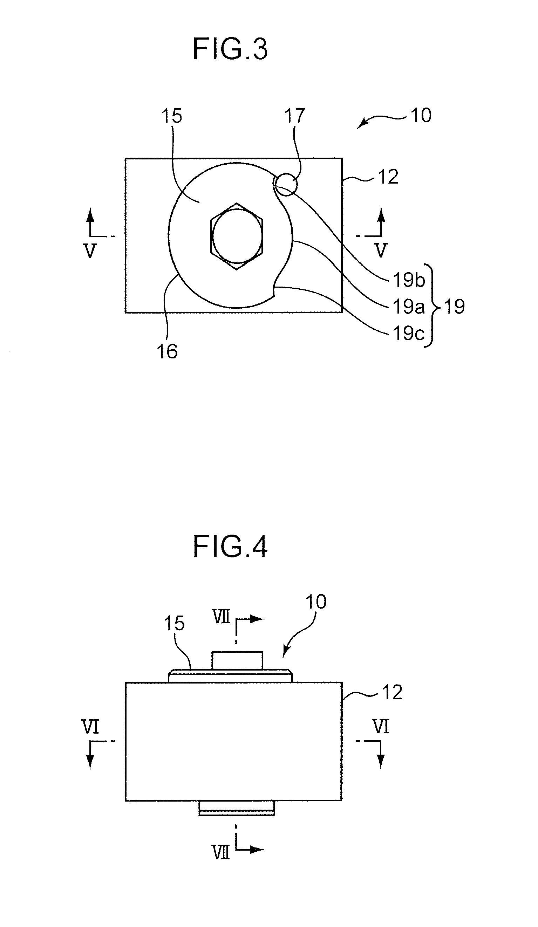

This will be more specifically described with reference to Fig. 3 to Fig. 7.

The flow-path hole 13 has an inlet opening 13a and an opposite outlet opening 13b shown in Fig. 7 at respective opposite ends of the flow-path hole 13 with respect to the direction of the center axis X2. The inlet opening 13a is an opening capable of facing the inlet port 18A of the holding member 12, while the outlet opening 13b is an opening capable of facing the outlet port 18B of the holding member 12. Similarly, the inlet port 18A and the outlet port 18B have respective valve-element-side openings 18a and 18b which face the valve element 11, that is, which face the inside thereof.

In the embodiment, each of the inlet opening 13a, the outlet opening 13b, and the valve element-side openings 18a and 18b has a circular outer edge. Moreover, as the feature of the valve 10, the outer edges of the inlet opening 13a and the outlet opening 13b have respective shapes capable of embracing the outer edges of the valve element-side openings 18a and 18b, respectively, and have respective sizes greater than respective sizes of the outer edges of the valve element-side openings 18a, 18b of the inlet port 18A and the outlet port 18B with respect to the circumstantial direction of the rotational movement of the valve element 11. Specifically, the inlet opening 13a and the outlet opening 13b have respective diameters greater than respective diameters of the valve element-side openings 18a and 18b. For example, in the case where each of the valve element-side openings 18a and 18b has a diameter of 16 mm, each of the inlet opening 13a and the outlet opening 13b preferably has a diameter of 20 mm. Needless to say, these specific dimensions are illustrative, not intended to limit the present invention.

The inlet opening 13a and outlet opening 13b of the flow-path hole 13 in the valve 10, thus having respective shapes capable of embracing respective outer edges of the valve element-side openings 18a and 18b corresponding to the openings 13a, 13b and having respective sizes greater than respective sizes of the outer edges of the valve element-side openings 18a, 18b of the inlet port 18A and 18B in the circumstantial direction of the rotational movement of the valve element 11, can prevent the outer peripheral surface 11a of the valve element 11 from facing the valve element-side openings 18a and 18b of the inlet port 18A and the outlet port 18B, even when the valve element 11 makes slightly rotational movement. The shape of one of the openings, that is, the inlet opening 13a, inhibits the valve 10 from being inconveniently closed by unintentionally rotationally moving the valve element 11 from the open position, that is, the first position, to the closed position, that is, the second position, under the pressure of the fluid acting on the outer peripheral surface 11a of the valve element 11.

For example, under the condition where: the diameter of each of the valve element-side openings 18a and 18b is 16 mm; the diameter of each of the inlet opening 13a and outlet opening 13b of the flow-path hole 13 is 20 mm; and the diameter of the valve element 11 is 40 mm, the outer peripheral surface 11a of the valve element 11 can be prevented from facing the valve element-side openings 18a and 18b even with the rotational movement of the valve element 11 from the first position by 6 degrees.

Besides, the flow-path hole 13, in which the inlet opening 13a and outlet opening 13b are circular, can be easily formed and allows hydraulic fluid to flow smoothly with exerting little resistance on the hydraulic fluid.

The valve and the construction machine according to the present invention are not limited to the above-described embodiment. Many variations and modifications may be made in the invention within the scope of the claims.

For example, the above-described effects can be obtained under the condition where at least the outer edge of the inlet opening 13a has a shape capable of embracing the outer edge of the valve element-side opening 18a of the inlet port 18A and a size greater than the size of the outer edge of the valve element-side opening 18a of the inlet port 18A in the circumstantial direction of the rotational movement of the valve element 11; meanwhile, the outer edge of the outlet opening 13b is not required to have a shape capable of embracing the outer edge of the valve element-side opening 18b of the outlet port 18B or to have a size greater than the outer edge of the valve element-side opening 18b of the outlet port 18B in the circumstantial direction of the rotational movement of the valve element 11.

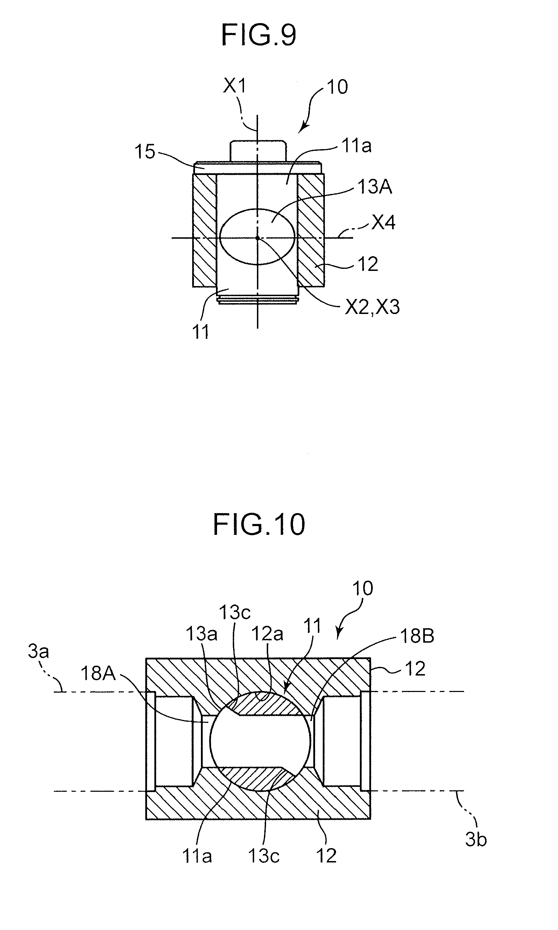

While the inlet opening 13a of the flow-path hole 13 according to the embodiment is shaped as a circle, the shape of the outer edge of the inlet opening of the flow-path hole according to the present invention is not limited to a circle but permitted to be shaped as an ellipse or any other loop. Specifically, like the inlet opening 13a shown in FIG 9, the inlet opening according to the invention may have an elliptic or oblong outer edge whose diameter in the direction of a horizontal axis X4, that is, in the circumstantial direction of the rotational movement of the valve element 11, is greater than the diameter in the direction of the rotation axis X1. Since the appearance of the outer peripheral surface 11a of the valve element 11 in the valve element-side opening 18a of the inlet port 18A can be caused by the rotational movement of the valve element 11 in a direction along the horizontal axis X4, i.e., in the circumstantial direction, as described above, setting the diameter of the inlet opening 13a of the flow-path hole 13 in the circumstantial direction to one greater than the diameter of the valve element-side opening 18a of the inlet port 18A allows the appearance of the outer peripheral surface 11a in the valve element-side opening 18a to be avoided. Furthermore, shaping the outer edge of the inlet opening 13a as an ellipse or any other horizontally long shape enables the opening area of the entire flow-path hole 13 to be restrained from excessive increase compared to forming the outer edge of the inlet opening 13a like a complete circle.

According to the present invention, the flow-path hole need not have a shape greater than the outer edge of the valve element-side opening of the inlet port in all of axial position, but only has to have a shape where at least the inlet opening of the flow-path hole is capable of embracing the outer edge of the valve element-side opening and have a greater size in the circumstantial direction of the rotational movement. For example, as shown in Fig. 10 and Fig. 11, the outer edge of the inlet opening 13a may be provided with such a chamfered portion 13c as increases the dimension of the inlet opening 13a in the circumstantial direction of the rotational movement. The formation of the chamfered portion 13c enables the valve closure restriction effect to be obtained without increasing the hole-diameter of the entire flow-path hole 13. The chamfered portion 13c may be formed only at an end of the inlet opening 13a in the circumstantial direction of the rotational movement as shown in Fig. 10 and Fig. 11 or all along the periphery of the outer edge of the inlet opening 13a.

The shape of the outer edge of the inlet opening according to the present invention is not limited to the circle, ellipse, and other looped shapes as described above. The shape of the outer edge of the inlet opening may be one other than a loop, for example, a polygon such as a triangle or a rectangle under the condition that the outer edge of the inlet opening has a shape embracing the outer edge of the valve element-side opening of the inlet port and has a size greater than the valve element-side opening in the circumstantial direction of the rotational movement.

The valve according to the present invention is not limited to the above-described stop valve. In other words, the application of the valve according to the present invention is not limited. The present invention can be applied to, for example, a selector valve.

As described above, the invention provides a valve including a valve element and being capable of suppressing unintentional rotational movement of the valve element from the open position to the closed position to close the valve. Provided by the present invention is a valve provided midway of a flow pipe forming a flow path to regulate a flow of liquid in the flow path, the valve including: a valve element with a cylindrical outer peripheral surface centered around a rotation axis orthogonal to a direction of the flow path of the flow pipe, the valve element formed with a flow-path hole penetrating the valve element orthogonally to the rotation axis; and a holding member holding the valve element while keeping contact with the outer peripheral surface of the valve element, so as to permit the valve element to make rotational movement about the rotation axis, the holding member having an inlet port to which an upstream section of the flow pipe is connected and an outlet port to which a downstream section of the flow pipe is connected, the inlet port and the outlet port located on respective opposite sides of the holding member across the valve element in a direction orthogonal to the rotation axis. The rotational movement about the rotation axis allows the valve element to move between a first position where the flow-path hole brings the inlet port and the outlet into communication with each other to open the flow path and a second position where the flow-path hole is deviated from the inlet port and the outlet port in a direction of the rotational movement to let the valve element block the communication between the inlet port and the outlet port thereby closing the flow path. The flow-path hole has an inlet opening and an outlet opening which face the inlet port and the outlet port, respectively, in the first position. The inlet opening has a shape capable of embracing an outer edge of a valve-element-side opening, which is an opening of the inlet port and faces the valve element, and a greater size than a size of the outer edge of the valve element-side opening of the inlet port in a circumferential direction of the rotational movement of the valve element.

According to the valve, the inlet opening of the flow-path hole, having a shape capable of embracing the outer edge of the valve element-side opening of the inlet port which faces the valve element and a size greater than the size of the outer edge of the valve element-side opening of the inlet port in the circumstantial direction of the rotational movement of the valve element, prevents the outer peripheral surface of the valve element from appearing in the valve element-side opening of the inlet port in spite of slight rotational movement of the valve element relative to the holding member. This makes it possible to suppress disadvantageous unintentional rotational movement of the valve element from the open position to the close position to finally close the valve.

The outer edge of each of the inlet opening and outlet opening of the flow-path hole is preferably circular. This allows fluid to flow smoothly through the flow-path hole.

Alternatively, the outer edge of each of the inlet opening and outlet opening of the flow-path hole is also preferably shaped as a loop having a first diameter in the circumstantial direction of the rotational movement of the valve element and a second diameter in a direction of the rotation axis, the first diameter being greater than the second diameter. This shape, differently from a case of simply increasing the diameter of a flow-path hole having circular inlet and outlet ports, can prevent the flow-path hole of the valve element from facing the valve element-side openings of the inlet port and the outlet port due to slight rotational movement of the valve element while avoiding an excessive increase in the opening area of the flow-path hole.

Preferably, at least a part of the outer edge of each of the inlet opening and outlet opening of the flow-path hole is chamfered so as to enlarge the outer edge in the circumstantial direction of the rotational movement of the valve element. The chamfering makes it possible to prevent the flow-path hole of the valve element from facing respective valve element-side openings of the inlet port and the outlet port due to slight rotational movement of the valve element while not involving an increase in the opening area of the entire flow-path hole.

Preferably, the valve according to the present invention further includes: a rotation-restriction member located outside the holding member and coupled to the valve element so as to make rotational movement about the rotation axis integrally with the valve element by undergoing a rotational operation about the rotation axis; and a locking portion provided in the holding member to make sliding contact with the rotation-restriction member so as to permit the rotation-restriction member to make the rotational movement and to lock the rotation-restriction member at the first position and at the second position so as to restrict the rotation-restriction member from rotational movement from the first position and from the second position. The combination of the rotation-restriction member and the locking section can restrain the valve element from moving from the first position and from the second position with no requirement of attachment or detachment of the locking section with respect to the holding member.

According to the present invention, also provided is a construction machine operated through hydraulic fluid, the construction machine including a flow pipe forming a flow path for the hydraulic fluid and the above-described valve, the valve being provided midway of the flow pipe to regulate flow of liquid in the flow pipe.

This application is based on Japanese Patent application No. 2013-225081 filed in Japan Patent Office on October 30, 2013, the contents of which are hereby incorporated by reference.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

A valve (10) capable of restraining a valve element (11) having a flow-path hole (13) from unintentional rotational movement to close the valve (10) is provided midway of a flow pipe, including the valve element (11) and a holding member (12) holding the valve element (11) to permit rotational movement thereof and having inlet and outlet ports (18A, 18B). The valve element (11) makes the rotational movement between a first position for bringing the ports (18A and 18B) into communication with each other through the flow-path hole (13) and a second position of blocking the communication to close the flow path. The flow-path hole (13) has inlet and outlet openings facing respective inlet and outlet ports (18A, 18b), in the first position. The inlet opening has a shape capable of embracing an outer edge of a valve-element-side opening of the inlet port (18A) facing the valve element (11) and a size greater than that of the outer edge of the valve-element-side opening circumstantially of the rotational movement of the valve element (11).

## Claims

1. A valve provided midway of a flow pipe forming a flow path to regulate a flow of liquid in the flow path, the valve comprising:
a valve element with a cylindrical outer peripheral surface centered around a rotation axis orthogonal to a direction of the flow path of the flow pipe, the valve element formed with a flow-path hole penetrating the valve element orthogonally to the rotation axis; and
a holding member holding the valve element while keeping contact with the outer peripheral surface of the valve element, so as to permit the valve element to make rotational movement about the rotation axis, the holding member having an inlet port to which an upstream section of the flow pipe is connected and an outlet port to which a downstream section of the flow pipe is connected, the inlet port and the outlet port located on respective opposite sides of the holding member across the valve element in a direction orthogonal to the rotation axis, wherein:
the rotational movement about the rotation axis allows the valve element to move between a first position where the flow-path hole brings the inlet port and the outlet into communication with each other to open the flow path and a second position where the flow-path hole is deviated from the inlet port and the outlet port in a direction of the rotational movement to let the valve element block the communication between the inlet port and the outlet port thereby closing the flow path; and
the flow-path hole has an inlet opening and an outlet opening which face the inlet port and the outlet port, respectively, in the first position, the inlet opening having a shape capable of embracing an outer edge of a valve-element-side opening, which is an opening of the inlet port and faces the valve element, and a greater size than a size of the outer edge of the valve element-side opening of the inlet port in a circumferential direction of the rotational movement of the valve element.

2. The valve according to claim 1, wherein each of the inlet opening and the outlet opening of the flow-path hole is circular.

3. The valve according to claim 1, wherein the outer edge of each of the inlet opening and outlet opening of the flow-path hole is shaped as a loop having a first diameter in the circumstantial direction of the rotational movement of the valve element and a second diameter in a direction of the rotation axis, the first diameter being greater that the second diameter.

4. The valve according to any one of claims 1 to 3, wherein at least a part of the outer edge of each of the inlet opening and outlet opening in the flow-path hole is chamfered so as to enlarge the outer edge in the circumstantial direction of the rotational movement of the valve element.

5. The valve according to any one of claims 1 to 4, further comprising: a rotation-restriction member located outside the holding member and coupled to the valve element so as to make rotational movement about the rotation axis integrally with the valve element by undergoing a rotational operation about the rotation axis; and a locking portion provided in the holding member to make sliding contact with the rotation-restriction member so as to permit the rotation-restriction member to make the rotational movement and to lock the rotation-restriction member at the first position and at the second position so as to restrict the rotation-restriction member from rotational movement from the first position and from the second position.

6. A construction machine configured to be operated through hydraulic fluid, the construction machine comprising:
a flow pipe forming a flow path for the hydraulic fluid and;
the valve according to any of claims 1 to 5, the valve being provided midway of the flow pipe to regulate flow of liquid in the flow pipe.
